# EUROPEAN PATENT SPECIFICATION

(11) **EP 4 098 484 B1**
(45) Date of publication and mention of the grant of the patent: **24.01.2024**
(21) Application number: 22175380.9
(22) Date of filing: 25.05.2022
(51) Int. Cl.: B60Q 1/00, B60Q 1/04, F21S 41/143, F21S 41/19, F21S 41/255, F21S 41/50, F21S 43/14, F21S 43/19, F21S 43/20, F21S 43/50, F21S 45/00, F21S 45/30, F21S 45/50, B62J 6/026, B62J 6/027, F21W 105/00, F21W 107/17

(54) **HEADLAMP UNIT AND LEANING VEHICLE**
SCHEINWERFEREINHEIT UND NEIGEFAHRZEUG
UNITÉ DE PHARE ET VÉHICULE INCLINABLE

(30) Priority: 31.05.2021 JP 2021090874
(43) Date of publication of application: 07.12.2022
(73) Proprietor: Yamaha Hatsudoki Kabushiki Kaisha, Iwata-shi, Shizuoka 438-8501 (JP)
(72) Inventor: SAGANE, Kazunari, Shizuoka, 438-8501 (JP)
(74) Representative: Stöckeler, Ferdinand

(56) References cited:
- EP-A1- 2 269 900
- EP-A1- 2 583 884
- EP-A1- 3 782 884
- JP-A- 2014 067 496
- JP-A- 2018 078 064
- JP-B2- 6 198 579
- US-A1- 2016 320 012

## Description

### Technical Field

The present invention relates to a headlamp unit and a leaning vehicle including the headlamp unit.

### Background Art

Leaning vehicles, which are typified by motorcycles, are provided with a headlamp unit that illuminates an area ahead. The headlamp unit of some types of leaning vehicles is exposed to the outside of the leaning vehicles. In such a headlamp unit, rainwater and the like is prevented from entering the unit.

For example, Patent Literature (PTL) 1 discloses a headlamp unit having a waterproof structure. This headlamp unit includes a base member, an outer lens, an inner lens, and electrical components. The base member and the outer lens form a casing, and cover the inner lens and the electrical components. The electrical components include a light source, a circuit board, and connectors.

JP 2014 067496 A discloses a headlamp for a motorcycle, which is a two-lamp (low beam and high beam) headlamp, which is combined with an outer lens to constitute a lamp chamber. A low beam optical system, a high beam optical system, a heat sink and an aiming mechanism are disposed in the lamp chamber. The extension of the outer lens is covered by a cowl.

EP 2 269 900 A1 teaches a headlight including a first lighting apparatus including a light source covered with a housing and an annular second lighting apparatus disposed around the housing. In the headlight, the second lighting apparatus is supported by an annularly formed annular stay that is supported by the housing and includes a plurality of light-emitting elements disposed annularly so as to be radially spaced apart from an outer periphery of the first lighting apparatus in a front view. The second lighting apparatus is supported by the housing.

EP 2 583 884 A1 teaches a front structure of a saddle-ride type vehicle, which includes headlights as well as an air introduction passage configured to introduce travelling winds rearward and open to the front. The headlights which use LEDs as their respective sources of light are located inside an air introduction passage and are supported by a duct which forms the air introduction passage.

EP 3 782 884 A1 discloses a headlamp for a motorcycle comprising a LED headlamp module, a LED position lamp module and an electric driver for supplying electric power to the headlamp module and the position lamp module through a plurality of harnesses and connectors. A headlamp further comprises a plurality of cover members, which protect the harnesses and the connectors against rainwater and dust.

### Citation List

### Patent Literature

PTL 1: WO 2009/117834 A1

### Summary of Invention

### Technical Problem

In the headlamp unit disclosed in PTL 1, the casing includes a waterproof structure, and each of the electrical components is contained inside the casing. The electrical components are therefore unlikely to be exposed to rainwater and the like. However, due to the casing entirely covering each of the electrical components and the inner lens, the headlamp unit tends to be large in size.

Furthermore, some headlamp units include a daytime running lamp and/or a position lamp in addition to a headlamp for nighttime running. If this is the case in a waterproof structure such as that in the headlamp unit disclosed in PTL 1, a plurality of types of lamps are contained in the casing. This results in the headlamp unit tending to be further larger in size.

Upsizing of the headlamp unit creates difficulties in disposing of the headlamp unit in a desired location. That is, the degree of freedom in the attachment of the headlamp unit to a vehicle body is restricted. A possible way to downsize the headlamp unit is by downsizing the casing. However, this way also requires downsizing of electrical components such as lamps that are contained inside the casing. In this case, it is difficult to employ desired shapes in designing the electrical components, restricting the degree of freedom in the design of the headlamp unit.

The present invention aims to provide a headlamp unit that allows for an increased degree of freedom in the attachment to a vehicle body and an increased degree of freedom in the design of the lamp while suppressing its upsizing.

### Solution to the Problem

The present inventor conducted studies to accomplish the above-described aim and found the following. In the headlamp unit disclosed in PTL 1, only the casing has a waterproof function. It is therefore necessary for other components such as the electrical components to be contained inside the casing. These components do not need to be contained inside the casing if the components themselves have their own waterproof function. The present invention was completed based on such a finding.
(1) A headlamp unit according to the present invention is for attachment to a vehicle body of a leaning vehicle. The headlamp unit includes a headlamp module, a sub-lamp module, an electric power supply module, a connector module, and a non-waterproof cover module. The headlamp module includes a headlamp LED. The sub-lamp module includes a sub-lamp LED, which is different from the headlamp LED. The electric power supply module supplies electric power to the headlamp module and/or the sub-lamp module. The connector module electrically connects the electric power supply module to the headlamp module and/or the sub-lamp module. The non-waterproof cover module has a non-waterproof structure. The headlamp unit has an integrated structure composed of at least the headlamp module, the sub-lamp module, the electric power supply module, and the non-waterproof cover module. In the integrated structure, the headlamp module, the sub-lamp module, the electric power supply module, and the connector module each have a waterproof structure, and the non-waterproof cover module is configured to cover at least a portion of the headlamp module and at least a portion of the sub-lamp module.

In the headlamp unit described in (1), the headlamp module, the sub-lamp module, the electric power supply module, and the connector module, which each include electrical components, have their own individual waterproof structure. This configuration eliminates the need to entirely cover these modules with a casing having a waterproof structure. Thus, upsizing of the headlamp unit can be suppressed. As a result, the degree of freedom in the attachment of the headlamp unit and the degree of freedom in the design of the headlamp unit can be increased.

The shape of the headlamp unit has a significant impact on the external appearance of the leaning vehicle. In the case of a headlamp unit in which only one casing for containing a plurality of modules has a waterproof structure, the entire headlamp unit needs to be redesigned when the leaning vehicle undergoes a model change. By contrast, in the headlamp unit described in (1), each of the aforementioned modules has its own waterproof structure, and thus they can be designed individually. As a result, the external appearance of the leaning vehicle can be changed by simply redesigning any given module. Thus, the design change is implemented in an easier and simpler manner when the leaning vehicle undergoes a model change.

(2) In the headlamp unit described in (1), the non-waterproof cover module may include a front cover and a back cover disposed in back of the front cover and configured to, together with the front cover, cover at least a portion of the headlamp module and at least a portion of the sub-lamp module. The back cover has a through hole penetrating an inner surface and an outer surface thereof.

The headlamp unit in the leaning vehicle tends to be located in a front portion of the vehicle and tends to be exposed. The headlamp unit is exposed to rain and wind while the leaning vehicle is running. As a result, water and dust easily get inside the cover module that covers other modules. Water and dust that have got inside the cover module are pushed by wind to move backward while the leaning vehicle is running. In the headlamp unit described in (2), the back cover in the non-waterproof cover module has a through hole. This configuration facilitates discharge of water and dust from the inside of the non-waterproof cover module to the outside via the through hole. Thus, the headlamp unit can have an improved function that allows it to be water-free and dust-free.

(3) The headlamp unit described in (1) or (2) may further include a support member. The support member is covered by the non-waterproof cover module at least in part. The headlamp module, the sub-lamp module, the electric power supply module, and the non-waterproof cover module are each attached to the support member. The support member has an attachment part configured to be attached to the vehicle body.

The headlamp unit is subjected to various forces such as wind pressure, its own weight, and inertial force. It is therefore required that the headlamp unit has a certain level of strength. In a case where each of a plurality of modules is attached to a different member, each of such members is required to have a strength for supporting the corresponding module attached thereto. In this case, each of the members has, for example, an increased thickness or a reinforcing member attached thereto, and thus tends to be large in size.

By contrast, in the headlamp unit described in (3), the modules are concentratively attached to the support member. In this configuration, the support member is mainly responsible for the strength of the headlamp unit. As long as the support member has a desired level of strength, the strength of the headlamp unit can be maintained or increased even if each of the modules is not reinforced. Thus, upsizing of each module can be suppressed, and as a result, upsizing of the headlamp unit can be further suppressed.

(4) In the headlamp unit described in any one of (1) to (3), the sub-lamp module may surround the headlamp module with a space therebetween in a front view of the headlamp unit. The headlamp module and the sub-lamp module are arranged to satisfy, in the front view, the following (a) and/or (b):
(a) in a left-right direction of the headlamp unit, the headlamp module as a whole is located between a leftmost end and a rightmost end of the sub-lamp module; and
(b) in an up-down direction of the headlamp unit, the headlamp module as a whole is located between an uppermost end and a lowermost end of the sub-lamp module.

In the headlamp unit described in (4), the headlamp module and the sub-lamp module have a space therebetween. Air flows through the space while the leaning vehicle is running. Thus, it is possible to efficiently cool the headlamp module and the sub-lamp module.

(5) A leaning vehicle according to the present invention includes the headlamp unit described in any one of (1) to (4).

The "leaning vehicle" is a machine for transport. The leaning vehicle is manned or unmanned. The leaning vehicle is, for example, a straddled vehicle. The straddled vehicle refers to a vehicle whose driver straddles a saddle thereof when seated. The leaning vehicle is, for example, a motorcycle or a motor tricycle. No particular limitations are placed on the motorcycle, and examples thereof include scooters, mopeds, off-road motorcycles, and on-road motorcycles. The straddled vehicle is not limited to motorcycles, and may be, for example, any vehicle such as an ATV (All-Terrain Vehicle). The leaning vehicle is not limited to straddled vehicles, and may be, for example, a three-wheel vehicle or a four-wheel vehicle having a cabin. The leaning vehicle having a cabin may include, for example, a seat for a driver to sit on without straddling the vehicle.

The leaning vehicle is configured to turn with a vehicle body thereof leaning. The leaning vehicle is configured to turn along a curve with a posture thereof leaning toward the inside of the curve in order to counter centrifugal force exerted on the leaning vehicle during the turn. The leaning vehicle may have, for example, two front wheels as steerable wheels. The leaning vehicle may have, for example, one or two rear wheels as drive wheels. The leaning vehicle has, for example, a handlebar. The leaning vehicle is, for example, configured to turn through posture control involving weight shifting of a rider thereon. With respect to the leaning vehicle, there is a strong demand for downsizing of the vehicle. It is therefore preferable to suppress upsizing of a headlamp unit that is mounted to the leaning vehicle.

The "headlamp unit" is attached to a front portion of a leaning vehicle. At least a portion of the headlamp unit is exposed to the outside of the leaning vehicle. The headlamp unit is an assembly of a plurality of modules. No particular limitations are placed on the number of headlamp units provided to one leaning vehicle; the leaning vehicle may be provided with one headlamp unit or a plurality of headlamp units. In a case where the leaning vehicle is provided with a headlamp of two-lamp type, the leaning vehicle may have two headlamp units. The two headlamp units each include one headlamp module. The leaning vehicle may have a single headlamp unit that includes two headlamp modules.

The "headlamp module" has a function of illuminating an area ahead of the leaning vehicle to increase frontward visibility for the rider. At least a portion of a light emission part of the headlamp module is not covered by the non-waterproof cover module and is exposed to the outside of the headlamp unit so that the exposed portion is visible from a location in front of the leaning vehicle. There is no waterproof structure between the exposed portion and the non-waterproof cover module that are adjacent to each other in a front view. One headlamp unit may include one headlamp module or a plurality of headlamp modules.

The "headlamp LED" is a light source of a headlamp. The headlamp LED emits, for example, white light. The headlamp LED has, for example, a color temperature of 5,000 to 6,000 K (Kelvin). The headlamp LED has, for example, a luminous intensity of greater than or equal to 15,000 cd (candela).

The "sub-lamp module" may function as, for example, a vehicle visibility lamp. The vehicle visibility lamp has a function of increasing the visibility of the leaning vehicle to others by illuminating at least one of a front region, a left region, or a right region of the leaning vehicle. Examples of vehicle visibility lamps include a daytime running lamp and a position lamp. The vehicle visibility lamp may function either as a daytime running lamp or as a position lamp. The vehicle visibility lamp may function both as a daytime running lamp and as a position lamp. In this case, the leaning vehicle is provided with a switch for switching between the daytime running lamp and the position lamp. The daytime running lamp and the position lamp are examples of the vehicle visibility lamp.

Alternatively, the sub-lamp module may function as, for example, an auxiliary headlamp. The auxiliary headlamp illuminates an area ahead of the leaning vehicle, and thus functions as a complement to the headlamp. Examples of auxiliary headlamps include a fog lamp and a cornering lamp. The fog lamp plays a role as a complement to the headlamp when the visual range is reduced. The cornering lamp is turned on when the leaning vehicle turns, to illuminate an area in a direction of the turn. At least a portion of a light emission part of the sub-lamp module is not covered by the non-waterproof cover module and is exposed to the outside of the headlamp unit so that the exposed portion is visible from a location in front of the leaning vehicle. There is no waterproof structure between the exposed portion and the non-waterproof cover module that are adjacent to each other in a front view. One headlamp unit may have one sub-lamp module or a plurality of sub-lamp modules. The plurality of sub-lamp modules may be of the same type or of different types.

The "sub-lamp LED" is a light source of a sub-lamp. The sub-lamp LED emits, for example, white light. The sub-lamp LED may emit light other than white light, such as yellow light, depending on the intended use. The sub-lamp LED has, for example, a color temperature of 5,000 to 6,000 K in the case of white light and a color temperature of 2,700 to 3,000 K in the case of yellow light. The sub-lamp LED has, for example, a luminous intensity of less than or equal to 1,200 cd in the case of the daytime running lamp, the fog lamp, or the cornering lamp, and a luminous intensity of less than or equal to 40 cd in the case of the position lamp. The luminous intensity of the sub-lamp LED is lower than the luminous intensity of the headlamp LED.

The "non-waterproof cover module" is a member that covers substantially the entire headlamp module and substantially the entire sub-lamp module. The non-waterproof cover module is, for example, completely or substantially uninvolved in the illumination by the headlamp and the sub-lamp at least in terms of transmission or reflection. The non-waterproof cover module has neither a lens function nor a reflector function. The non-waterproof cover module may be, for example, capable of partially blocking light emitted by the headlamp or the sub-lamp. The headlamp unit can form a desired illumination area without the non-waterproof cover module. The non-waterproof cover module is made from, for example, a resin. The non-waterproof cover module is, for example, colored and is not transparent.

The "integrated structure" refers to a structure obtained by combining a plurality of modules into a single unit. In the integrated structure, for example, positional relationships between the modules remain unchanged or substantially unchanged. Remaining substantially unchanged means a state in which a slight change is allowed caused by, for example, vibration or wind pressure. The headlamp unit having an integrated structure can be, for example, carried around as a single unit without the need to remove any of the modules. The headlamp unit having an integrated structure is attachable to and detachable from the leaning vehicle as a single unit without the need to remove any of the modules. However, from the headlamp unit having an integrated structure, each module can be removable by use of a tool.

The "waterproof structure" refers to a structure that protects an object from liquid, such as water, entering so that no function of the object is compromised. The waterproof structure does not necessarily need to have an enclosed space as long as the function of the object being protected is not compromised. The casing in which the headlamp LED is contained may have, for example, a ventilation hole. The ventilation hole may be a mere through hole or may be plugged with a waterproof and breathable plugging material. The waterproof structure may be rated as, for example, IPX4 or higher according to the IEC (International Electrotechnical Commission). The waterproof structure may be rated as, for example, IPX5 or higher. The "non-waterproof structure" refers to any structure other than the waterproof structure described above.

The above and other aims, features, aspects, and advantages of the present invention will become more apparent from the following detailed description of some embodiments of the present invention given with reference to the accompanying drawings.

As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups.

Unless otherwise defined, all terms (including technical and scientific terms) used herein have the same meaning as commonly understood by one of ordinary skill in the art to which the present teaching belongs. It will be understood that terms, such as those defined in commonly used dictionaries, should be interpreted as having a meaning that is consistent with their meaning in the context of the present invention and relevant art and should not be interpreted in an idealized or overly formal sense unless expressly so defined herein.

In the description given below, for the purposes of explanation, numerous specific details are set forth in order to provide a thorough understanding of the present invention. It will be apparent, however, that those skilled in the art may practice the present invention without these specific details. The present disclosure is to be considered as an exemplification of the present invention, and is not intended to limit the present invention to the specific embodiments illustrated by drawings or descriptions below. The present invention is limited only by the appended claims.

### Advantageous Effects of Invention

The present invention allows for an increased degree of freedom in the attachment of a headlamp unit to a vehicle body and an increased degree of freedom in the design for the lamp while suppressing upsizing of the headlamp unit.

### Brief Description of Drawings

[FIG. 1(a)] A side view of a leaning vehicle according to an embodiment.
[FIG. 1(b)] A perspective view of a headlamp unit according to the embodiment.
[FIG. 1(c)] An exploded perspective view of the headlamp unit according to the embodiment.
[FIG. 2] A cross-sectional view of the headlamp unit according to the embodiment as taken through a plane along an up-down direction and a front-back direction.
[FIG. 3] A front view of the headlamp unit according to the embodiment.
[FIG. 4] An exploded view of a sub-lamp module.
[FIG. 5] An exploded perspective view of the headlamp unit according to the embodiment as seen in a different direction from FIG. 1(c).
[FIG. 6] A back perspective view of a headlamp module and the sub-lamp module.

### Description of Embodiments

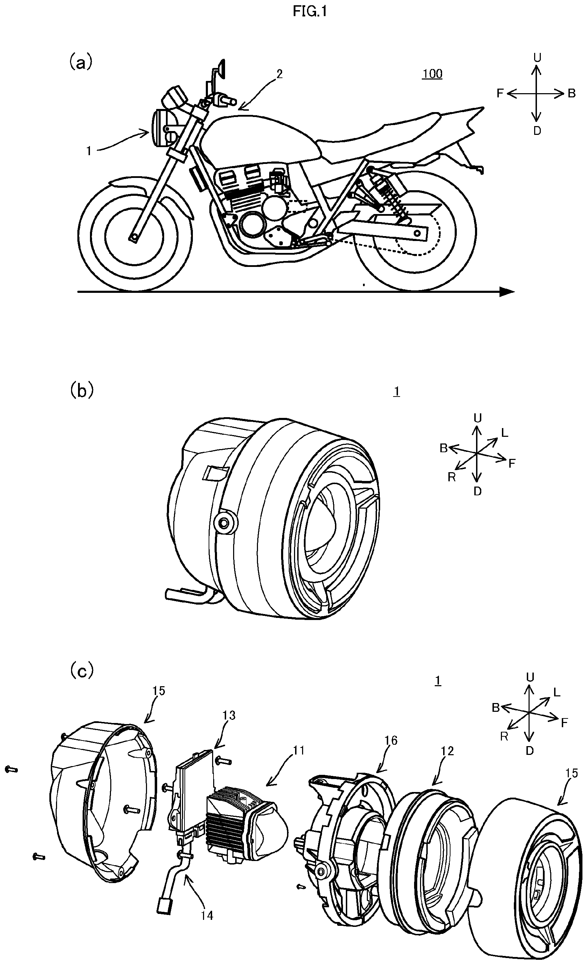

Referring to FIGS. 1(a) to 1(c), the following schematically describes a leaning vehicle and a headlamp unit according to an embodiment of the present invention.

FIG. 1(a) is a side view of the leaning vehicle according to the present embodiment. A leaning vehicle 100 is, for example, a motorcycle. The leaning vehicle 100 includes a headlamp unit 1 and a vehicle body 2. The headlamp unit 1 is attached to a front portion of the leaning vehicle 100. The headlamp unit is, for example, attached to the vehicle body 2 with a bracket therebetween. At least a portion of the headlamp unit 1 is exposed to the outside of the leaning vehicle 100.

FIG. 1(b) is a perspective view of the headlamp unit according to the present embodiment. The headlamp unit 1 has, for example, a substantially cannonball-like shape. The headlamp unit 1 is a single unit composed of a combination of a plurality of modules. The headlamp unit 1 is attachable to and detachable from the leaning vehicle 100 as a single unit without the need to remove any of the modules.

FIG. 1(c) is an exploded perspective view of the headlamp unit according to the present embodiment. The headlamp unit 1 includes a headlamp module 11, a sub-lamp module 12, an electric power supply module 13, a connector module 14, a non-waterproof cover module 15, and a support member 16.

The headlamp module 11 has a substantially box-like shape. The headlamp module 11 includes a headlamp LED. The headlamp LED is contained in a casing, and the interior of the casing is substantially sealed. That is, the headlamp module 11 has a waterproof structure. The details of the waterproof structure will be described below.

The sub-lamp module 12 has a substantially annular shape in a front view. The sub-lamp module 12 includes a sub-lamp LED, which is different from the headlamp LED. The sub-lamp LED is contained in a casing, and the interior of the casing is substantially sealed. That is, the sub-lamp module 12 has a waterproof structure.

The electric power supply module 13 has a substantially box-like shape. The electric power supply module 13 supplies electric power to the headlamp module 11. The electric power supply module 13 may supply electric power both to the headlamp module 11 and to the sub-lamp module 12, or may only supply electric power either to the headlamp module 11 or to the sub-lamp module 12. The electric power supply module 13 is connected to a power source device such as a battery and regulates, for example, voltage and current to be supplied to the headlamp module 11. The electrical components of the electric power supply module 13 are contained in a casing, and the interior of the casing is substantially sealed. That is, the electric power supply module 13 has a waterproof structure.

The connector module 14 electrically connects the electric power supply module 13 to the headlamp module 11. However, in a configuration in which the electric power supply module 13 supplies electric power to the sub-lamp module 12, the connector module 14 electrically connects the electric power supply module 13 to the sub-lamp module 12. The connector module 14 has a waterproof structure.

The non-waterproof cover module 15 has a substantially circular cylindrical box-like shape. The non-waterproof cover module 15 covers at least a portion of the headlamp module 11 and at least a portion of the sub-lamp module 12. The non-waterproof cover module 15 has a non-waterproof structure.

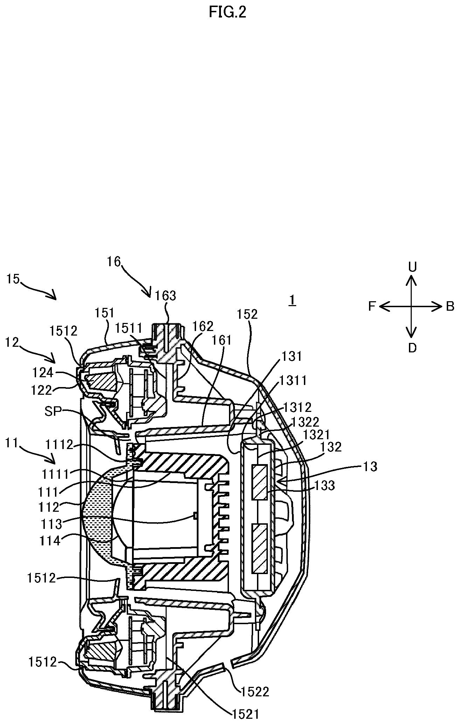

The following describes the headlamp unit 1 according to the present embodiment in more detail. FIG. 2 is a cross-sectional view of the headlamp unit as taken through a plane along an up-down direction UD and a front-back direction FB. Note that the up-down direction UD, the front-back direction FB, and a left-right direction LR are defined with reference to the leaning vehicle 100 in an upright state with the headlamp unit 1 mounted thereto.

The headlamp module 11 includes a housing 111, an outer lens 112, a headlamp LED 113, and an inner lens 114.

The housing 111 has a substantially box-like shape having an opening part 1111 in a front face thereof. More specifically, the housing 111 has a substantially hat-like shape in a cross-sectional view along the up-down direction UD and the front-back direction FB. The housing 111 has an attachment part 1112 in a brim portion of the hat-like shape. The attachment part 1112 spans the entire edge of the opening part 1111. The attachment part 1112 may be provided with a sealing material such as packing or a silicone material.

The outer lens 112 is disposed in front of the housing 111 in the front direction F. The outer lens 112 has a substantially dome-like shape. The outer lens 112 is, for example, a plano-convex lens. The outer lens 112 is disposed with a convex surface thereof facing in the front direction F. The outer lens 112 is attached to the attachment part 1112 of the housing 111 using, for example, screws or adhesives. The outer lens 112, together with the housing 111, forms the casing. The interior of this casing is substantially sealed, so that the casing has a waterproof structure. The headlamp LED 113 and the inner lens 114 are contained inside the casing.

The headlamp LED 113 is attached to a substrate, which is not shown. The headlamp LED 113 is disposed with an emission surface thereof facing in the front direction F. The headlamp LED 113 emits, for example, white light in the front direction F. The headlamp LED 113 has, for example, a color temperature of 5,000 K. The headlamp LED 113 has, for example, a luminous intensity of 20,000 cd.

The inner lens 114 is disposed between the headlamp LED 113 and the outer lens 112. The inner lens 114 is, for example, a plano-convex lens. The inner lens 114 is disposed with a convex surface thereof facing in the front direction F. The inner lens 114, together with the outer lens 112, collects light emitted from the headlamp LED 113 to form a desired illumination area.

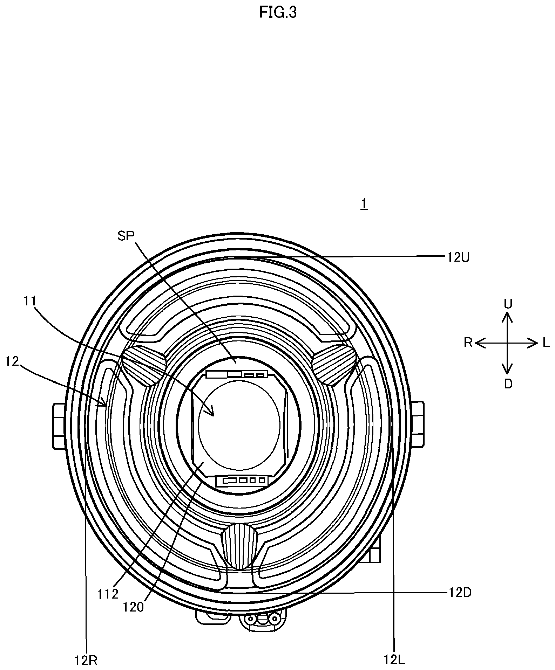

FIG. 3 is a front view of the headlamp unit according to the present embodiment. In the left-right direction LR of the headlamp unit 1, the headlamp module 11 as a whole is located between a leftmost end 12L and a rightmost end 12R of the sub-lamp module 12. In the up-down direction UD of the headlamp unit 1, the headlamp module 11 as a whole is located between an uppermost end 12U and a lowermost end 12D of the sub-lamp module 12.

The sub-lamp module 12 is disposed to surround the headlamp module 11. The sub-lamp module 12 has a cavity part 120 around the center thereof. The headlamp module 11 is disposed in the cavity part 120. More specifically, the sub-lamp module 12 surrounds, for example, the outer lens 112 of the headlamp module 11. The sub-lamp module 12 and the headlamp module 11 have a space SP therebetween. The space SP spans the entire perimeter of the headlamp module 11 in a front view.

According to the present embodiment, the sub-lamp module 12 functions as a daytime running lamp and a position lamp. A selector switch, which is not shown, controls switching of the sub-lamp module 12 between functioning as a daytime running lamp and functioning as a position lamp. The selector switch is, for example, provided on a steering of the leaning vehicle 100.

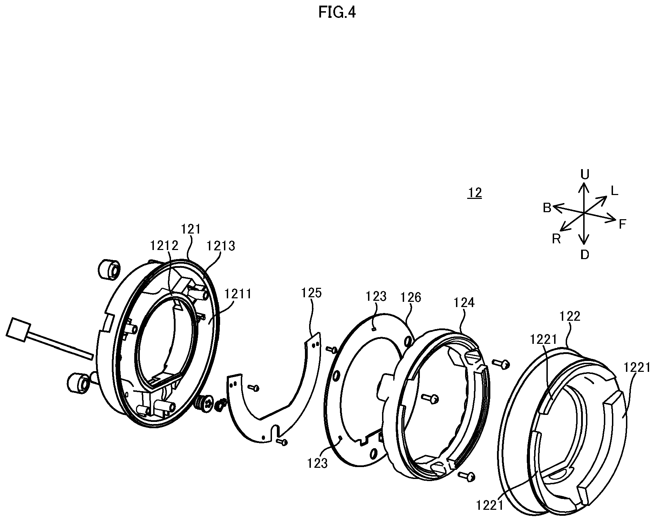

FIG. 4 is an exploded view of the sub-lamp module. The sub-lamp module 12 includes a housing 121, an outer lens 122, a plurality of sub-lamp LEDs 123, an inner lens 124, a control board 125, and an LED substrate 126.

The housing 121 has a substantially annular shape having an opening part 1211 in a front face thereof. The annular shape of the housing 121 is a substantially hat-like shape in a cross-sectional view along the up-down direction UD and the front-back direction FB. The housing 121 has attachment parts 1212 and 1213 in a brim portion of the hat-like shape. The attachment part 1212 is an inner edge of the housing 121. The attachment part 1213 is an outer edge of the housing 121. The attachment parts 1212 and 1213 span the entire edge of the opening part 1211. The attachment parts 1212 and 1213 may be provided with a sealing material such as packing or a silicone material.

The outer lens 122 is disposed in front of the housing 121 in the front direction F. The outer lens 122 has a substantially hollow cylindrical shape having an opening part (not shown) in a back face thereof. The outer lens 122 has a transparent color as a whole. The outer lens 122 includes a plurality of lens parts 1221 at a front face thereof. The plurality of lens parts 1221 are arranged at regular intervals and project in the front direction F. The plurality of lens parts 1221 are, for example, plano-convex lenses. The plurality of lens parts 1221 are each disposed with a convex surface thereof facing in the front direction F. The outer lens 122 is attached to the attachment parts 1212 and 1213 of the housing 121 using, for example, screws or adhesives. The outer lens 122, together with the housing 121, forms the casing. The interior of this casing is substantially sealed, so that the casing has a waterproof structure. The control board 125, the sub-lamp LEDs 123, the inner lens 124, and the LED substrate 126 are contained inside the casing.

The control board 125 is attached to the housing 121. The control board 125 is electrically connected to a power source device such as a battery, which is not shown, and connected to the LED substrate 126. The control board 125 supplies electric power to the sub-lamp LEDs 123 via the LED substrate 126. The control board 125 adjusts the luminous intensity of the sub-lamp LEDs 123 in response to a signal from the selector switch, which is not shown. The LED substrate 126 and the sub-lamp LEDs 123 are disposed in front of the control board 125 in the front direction F.

The sub-lamp LEDs 123 are attached to the LED substrate 126. The sub-lamp LEDs 123 are each disposed with an emission surface thereof facing in the front direction F. The sub-lamp LEDs 123 emit, for example, white light in the front direction F. The sub-lamp LEDs 123 have, for example, a color temperature of 5,000 K. The sub-lamp LEDs 123 have, for example, a luminous intensity of 1,000 cd in the case of the daytime running lamp and a luminous intensity of 30 cd in the case of the position lamp.

The inner lens 124 is disposed between the sub-lamp LEDs 123 and the outer lens 122. The inner lens 124 has a substantially hollow cylindrical shape. The inner lens 124 has, for example, the same shape as a substantially plano-convex lens.

Referring to FIG. 2, the inner lens 124 is disposed with a convex surface thereof facing in the back direction B. That is, the convex surface is a light receiving surface that receives light from the sub-lamp LEDs 123. A front surface of the inner lens 124 is an emission surface. The front surface of the inner lens 124 has a staircase shape having a height that decreases toward a central axis of the sub-lamp module 12. In the inner lens 124, the area of the light receiving surface is larger than the area of the emission surface. That is, the inner lens 124 has a tapered shape having a thickness that decreases in the front direction F. The inner lens 124, together with the outer lens 122, collects light emitted from the sub-lamp LEDs 123 to form a desired illumination area.

The electric power supply module 13 is disposed in back of the headlamp module 11 in the back direction B. The electric power supply module 13 includes a front case 131, a back case 132, and a control board 133.

The front case 131 has a substantially box-like shape having an opening part 1311 in a back face thereof. More specifically, the front case 131 has a substantially hat-like shape in a cross-sectional view along the up-down direction UD and the front-back direction FB. The front case 131 has an attachment part 1312 in a brim portion of the hat-like shape. The attachment part 1312 spans the entire perimeter of the opening part 1311. The attachment part 1312 may be provided with a sealing member such as packing or may have a silicone material applied thereto.

The back case 132 is disposed in back of the front case 131 in the back direction B. The back case 132 has a substantially box-like shape having an opening part 1321 in a front face thereof. More specifically, the back case 132 has a substantially hat-like shape in a cross-sectional view along the up-down direction UD and the front-back direction FB. The back case 132 has an attachment part 1322 in a brim portion of the hat-like shape. The attachment part 1322 spans the entire perimeter of the opening part 1321. The attachment part 1322 is attached to the attachment part 1312 of the front case 131 using, for example, screws or adhesives.

The back case 132, together with the front case 131, forms the casing. The interior of this casing is substantially sealed, so that the casing has a waterproof structure. The control board 133 is contained inside the casing.

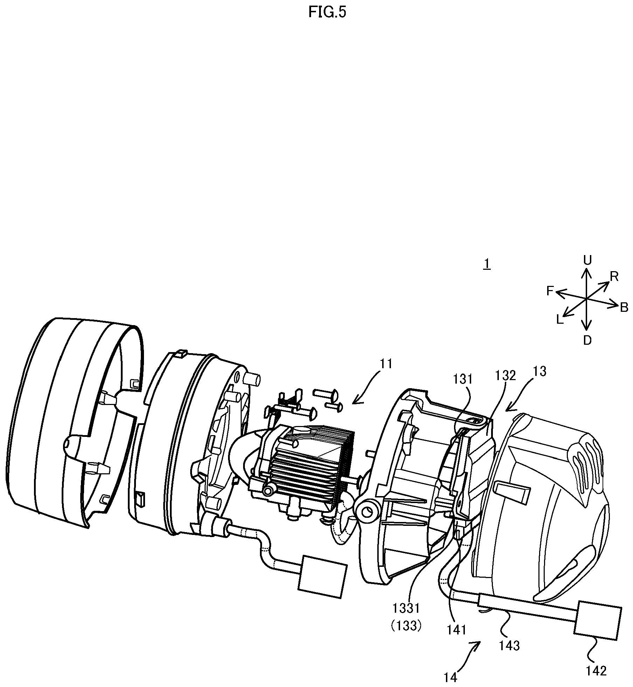

FIG. 5 is an exploded perspective view of the headlamp unit according to the present embodiment as seen in a different direction from FIG. 1(c). The control board 133 is connected to a power source device such as a battery, which is not shown, and supplies electric power to the headlamp module 11. An insertion port 1331 is provided in a lower portion of the control board 133. The insertion port 1331 protrudes to the outside of the casing formed by the front case 131 and the back case 132. The connector module 14 is connected to the insertion port 1331.

The connector module 14 includes two connector bodies 141 and 142, and a wire 143.

The connector body 141 is inserted into the insertion port 1331 of the control board 133. The connector body 142 is connected to a power source device, which is not shown, of the leaning vehicle 100 or to a relay device, which is not shown, connected to the power source device. The wire 143 connects the connector body 141 and the connector body 142 together. The wire 143 is covered with a covering material such as vinyl chloride.

An area of connection between the connector body 141 and the insertion port 1331 is covered with, for example, a silicone material. The area of connection may be covered with a waterproof covering material such as vinyl chloride. That is, the connector module 14 has a waterproof structure.

Referring to FIG. 2, the non-waterproof cover module 15 includes a front cover 151 and a back cover 152.

The front cover 151 has a substantially cylindrical box-like shape having an opening part 1511 in a back face thereof. The front cover 151 has a plurality of opening parts 1512 in a front face thereof. In a front view of the headlamp unit 1, the outer lens 112 of the headlamp module 11 and the outer lens 122 of the sub-lamp module 12 are disposed in the plurality of opening parts 1512.

The back cover 152 is disposed in back of the front cover 151 in the back direction B. The back cover 152 has a substantially cylindrical box-like shape having an opening part 1521 in a front face thereof. The back cover 152, together with the front cover 151, covers a portion of the headlamp module 11 and a portion of the sub-lamp module 12. More specifically, the back cover 152 and the front cover 151 cover a portion other than a front face of the headlamp module 11 and a portion other than a front face of the sub-lamp module 12.

The back cover 152 has a through hole 1522 penetrating an inner surface and an outer surface thereof. The through hole 1522 is, for example, located in a lower portion of the back cover 152.

The headlamp module 11, the sub-lamp module 12, the electric power supply module 13, and the non-waterproof cover module 15 described above are each attached to the support member 16.

The support member 16 is disposed in back of the sub-lamp module 12 in the back direction B and in front of the back cover 152 in the front direction F. The support member 16 directly supports the headlamp module 11, the sub-lamp module 12, the electric power supply module 13, and the non-waterproof cover module 15. The support member 16 includes a cylindrical part 161 and a disk part 162.

The cylindrical part 161 has a substantially hollow cylindrical shape. At least a portion of the headlamp module 11 is disposed inside the cylindrical part 161.

The disk part 162 has a substantially disk-like shape having a hole in a central portion thereof. An inner circumferential surface of the disk part 162 is connected to an outer circumferential surface of the cylindrical part 161. That is, the support member 16 has a shape in which the cylindrical part 161 is fitted into the hole of the disk part 162. The disk part 162 is integral with the cylindrical part 161.

An attachment part 163 is provided on an outer circumferential surface of the disk part 162. The attachment part 163 is, for example, a solid cylindrical boss. The attachment part 163 is, for example, attached to the vehicle body with a bracket therebetween.

In the headlamp unit 1 according to the present embodiment, the headlamp module 11, the sub-lamp module 12, the electric power supply module 13, and the connector module 14 each have its own waterproof structure. This configuration eliminates the need to entirely cover the aforementioned modules using a large-size casing having a waterproof structure. Such a large-size casing having a waterproof structure for containing the aforementioned modules would need a large attachment margin for attaching components of the casing to one another. By contrast, each of the aforementioned modules in the headlamp unit 1 according to the present embodiment has its own casing. The casing of each module has a smaller size than the large-size casing having a waterproof structure. The casing of each module therefore only needs a small attachment margin. Thus, upsizing of the headlamp unit can be suppressed. As a result, the degree of freedom in the attachment of the headlamp unit and the degree of freedom in the design of the headlamp unit can be increased.

In the case of a headlamp unit having a casing in which a plurality of modules are contained, each of the modules needs to be designed so as to fit the shape of the casing. By contrast, each of the aforementioned modules in the headlamp unit 1 according to the present embodiment has its own waterproof structure. This configuration allows each module to be designed without depending on the shape of the casing. When the leaning vehicle undergoes a model change, for example, the external appearance of the leaning vehicle can be changed by simply redesigning any given module. Thus, the design change is implemented in an easier and simpler manner when the leaning vehicle undergoes a model change.

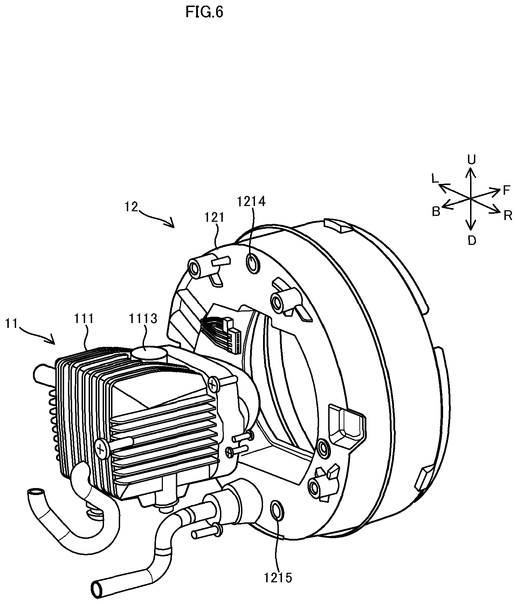

In the case of the embodiment described above, the headlamp module 11, the sub-lamp module 12, and the electric power supply module 13 each have a waterproof structure. The waterproof structure according to the present embodiment encompasses not only cases where a casing having a completely sealed interior is formed, but also cases where a casing having a substantially sealed interior is formed. For example, a top face of the housing 111 of the headlamp module 11 may have a ventilation hole 1113 as seen in FIG. 6. For another example, a back face of the housing 121 of the sub-lamp module 12 may have ventilation holes 1214 and 1215. The ventilation holes 1113, 1214, and 1215 are each plugged with, for example, a waterproof and breathable plugging material. This configuration allows the electrical components contained inside the casings to be cooled.

In the case of the embodiment described above, the back cover 152 has a through hole. However, the back cover 152 does not have to have a through hole.

In the case of the embodiment described above, the headlamp unit 1 includes the support member 16. However, the headlamp unit 1 does not have to have a support member. In this case, each of the modules is, for example, attached to another module adjacent thereto. In this case, the headlamp unit 1 has an integrated structure composed of the headlamp module 11, the sub-lamp module 12, the electric power supply module 13, and the non-waterproof cover module 15.

In the case of the embodiment described above, the headlamp module 11 and the sub-lamp module 12 have a space therebetween. However, the headlamp module 11 and the sub-lamp module 12 do not have to have a space therebetween.

In the case of the embodiment described above, the headlamp unit 1 includes a single sub-lamp module 12. However, the headlamp unit 1 may include a plurality of sub-lamp modules 12. In this case, for example, the plurality of sub-lamp modules 12 are arranged at regular intervals to surround the headlamp module 11 in a front view.

In the case of the embodiment described above, the sub-lamp module 12 includes a plurality of sub-lamp LEDs 123. However, the sub-lamp module 12 may include only one sub-lamp LED 123.

### Reference Signs List

- 100: leaning vehicle
- 1: headlamp unit
- 2: vehicle body
- 11: headlamp module
- 111: housing
- 1111: opening part
- 1112: attachment part
- 1113: ventilation hole
- 112: outer lens
- 113: headlamp LED
- 114: inner lens
- 12: sub-lamp module
- 121: housing
- 1211: opening part
- 1212,1213: attachment part
- 1214,1215: ventilation hole
- 122: outer lens
- 1221: lens part
- 123: sub-lamp LED
- 124: inner lens
- 125: control board
- 126: LED substrate
- 12D: lowermost end
- 12L: leftmost end
- 12R: rightmost end
- 12U: uppermost end
- 13: electric power supply module
- 131: front case
- 1311: opening part
- 1312: attachment part
- 132: back case
- 1321: opening part
- 1322: attachment part
- 133: control board
- 1331: insertion port
- 14: connector module
- 141, 142: connector body
- 143: wire
- 15: non-waterproof cover module
- 151: front cover
- 1511,1512: opening part
- 152: back cover
- 1521: opening part
- 1522: through hole
- 16: support member
- 161: cylindrical part
- 162: disk part
- 163: attachment part
- SP: space

## Claims

1. A headlamp unit (1) for attachment to a vehicle body (2) of a leaning vehicle (100), the headlamp unit (1) comprising:
a headlamp module (11) including a headlamp LED (113);
a sub-lamp module (12) including a sub-lamp LED (123), which is different from the headlamp LED (113);
an electric power supply module (13) configured to supply electric power to the headlamp module (11) and/or the sub-lamp module (12);
a connector module (14) configured to electrically connect the electric power supply module (13) to the headlamp module (11) and/or the sub-lamp module (12); and
a non-waterproof cover module (15) having a non-waterproof structure,
the headlamp unit (1) having an integrated structure composed of at least the headlamp module (11), the sub-lamp module (12), the electric power supply module (13), and the non-waterproof cover module (15), wherein
in the integrated structure, the headlamp module (11), the sub-lamp module (12), the electric power supply module (13), and the connector module (14) each have a waterproof structure, and the non-waterproof cover module (15) is configured to cover at least a portion of the headlamp module (11) and at least a portion of the sub-lamp module (12).

2. The headlamp unit (1) according to claim 1, wherein
the non-waterproof cover module (15) includes
a front cover (151), and
a back cover (152) disposed in back of the front cover (151) and configured to, together with the front cover (151), cover at least a portion of the headlamp module (11) and at least a portion of the sub-lamp module (12), and
the back cover (152) has a through hole (1522) penetrating an inner surface and an outer surface thereof.

3. The headlamp unit (1) according to claim 1 or 2, further comprising
a support member (16) covered by the non-waterproof cover module (15) at least in part, wherein
the headlamp module (11), the sub-lamp module (12), the electric power supply module (13), and the non-waterproof cover module (15) are each attached to the support member (16), and
the support member (16) has an attachment part (163) configured to be attached to the vehicle body (2).

4. The headlamp unit (1) according to any one of claims 1 to 3, wherein
the sub-lamp module (12) surrounds the headlamp module (11) with a space (SP) therebetween in a front view of the headlamp unit (1), and
the headlamp module (11) and the sub-lamp module (12) are arranged to satisfy, in the front view, the following (a) and/or (b):
(a) in a left-right direction of the headlamp unit (1), the headlamp module (11) as a whole is located between a leftmost end (12L) and a rightmost end (12R) of the sub-lamp module (12); and
(b) in an up-down direction of the headlamp unit (1), the headlamp module (11) as a whole is located between an uppermost end (12U) and a lowermost end (12D) of the sub-lamp module (12).

5. A leaning vehicle (100) comprising the headlamp unit (1) according to any one of claims 1 to 4.

## Patentansprüche

1. Eine Scheinwerfereinheit (1) zur Anbringung an eine Fahrzeugkarosserie (2) eines Neigungsfahrzeugs (100), wobei die Scheinwerfereinheit (1) folgende Merkmale aufweist:
ein Scheinwerfermodul (11), das eine Scheinwerfer-LED (113) umfasst;
ein Teillampenmodul (12), das eine Teillampen-LED (123) umfasst, die sich von der Scheinwerfer-LED (113) unterscheidet;
ein Elektrische-Leistungsversorgung-Modul (13), das dazu konfiguriert ist, das Scheinwerfermodul (11) und/oder das Teillampenmodul (12) mit elektrischer Leistung zu versorgen;
ein Verbindermodul (14), das dazu konfiguriert ist, das Elektrische-Leistungsversorgung-Modul (13) mit dem Scheinwerfermodul (11) und/oder dem Teillampenmodul (12) zu verbinden; und
ein nicht wasserdichtes Abdeckungsmodul (15), das eine nicht wasserdichte Struktur aufweist,
wobei die Scheinwerfereinheit (1) eine integrierte Struktur aufweist, die aus zumindest dem Scheinwerfermodul (11), dem Teillampenmodul (12), dem Elektrische-Leistung-Liefermodul (13) und dem nicht wasserdichten Abdeckungsmodul (15) besteht, wobei
in der integrierten Struktur das Scheinwerfermodul (11), das Teillampenmodul (12), das Elektrische-Leistung-Liefermodul (13) und das Verbindermodul (14) jeweils eine wasserdichte Struktur aufweisen und das nicht wasserdichte Abdeckungsmodul (15) dazu konfiguriert ist, zumindest einen Abschnitt des Scheinwerfermoduls (11) und zumindest einen Abschnitt des Teillampenmoduls (12) abzudecken.

2. Die Scheinwerfereinheit (1) gemäß Anspruch 1, wobei
das nicht wasserdichte Abdeckungsmodul (15) folgende Merkmale umfasst:
eine vordere Abdeckung (151), und
eine hintere Abdeckung (152), die hinter der vorderen Abdeckung (151) angeordnet ist und dazu konfiguriert ist, zusammen mit der vorderen Abdeckung (151) zumindest einen Abschnitt des Scheinwerfermoduls (11) und zumindest einen Abschnitt des Teillampenmoduls (12) abzudecken, und
die hintere Abdeckung (152) ein Durchgangsloch (1522) aufweist, das eine innere Oberfläche und eine äußere Oberfläche derselben durchdringt.

3. Die Scheinwerfereinheit (1) gemäß Anspruch 1 oder 2, die ferner ein Trägerbauglied (16) aufweist, das zumindest zum Teil von dem nicht wasserdichten Abdeckungsmodul (15) abgedeckt ist, wobei
das Scheinwerfermodul (11), das Teillampenmodul (12), das Elektrische-Leistung-Liefermodul (13) und das nicht wasserdichte Abdeckungsmodul (15) jeweils an dem Trägerbauglied (16) angebracht sind, und
das Trägerbauglied (16) ein Anbringungsteil (163) aufweist, das dazu konfiguriert ist, an der Fahrzeugkarosserie (2) angebracht zu sein.

4. Die Scheinwerfereinheit (1) gemäß einem der Ansprüche 1 bis 3, bei der
in einer Vorderansicht der Scheinwerfereinheit (1), das Teillampenmodul (12) das Scheinwerfermodul (11) mit einem Raum (SP) zwischen denselben und
das Scheinwerfermodul (11) und das Teillampenmodul (12) derart angeordnet sind, das Folgende (a) und/oder (b) in der Vorderansicht zu erfüllen:
(a) in einer Links-Rechts-Richtung der Scheinwerfereinheit (1) befindet sich das Scheinwerfermodul (11) in Gänze zwischen einem äußersten linken Ende (12L) und einem äußersten rechten Ende (12R) des Teillampenmoduls (12); und
(b) in einer Oben-Unten-Richtung der Scheinwerfereinheit (1) befindet sich das Scheinwerfermodul (11) in Gänze zwischen einem obersten Ende (12U) und einem untersten Ende (12D) des Teillampenmoduls (12).

5. Ein Neigungsfahrzeug (100), das die Scheinwerfereinheit (1) gemäß einem der Ansprüche 1 bis 4 aufweist.

## Revendications

1. Unité de phare (1) destinée à être fixée à une carrosserie de véhicule (2) d'un véhicule à inclinaison (100), l'unité de phare (1) comprenant:
un module de phare (11) comprenant une LED de phare (113);
un module de lampe secondaire (12) comprenant une LED de lampe secondaire (123) qui est différente de la LED (113) de phare;
un module d'alimentation de courant électrique (13) configuré pour alimenter du courant électrique vers le module de phare (11) et/ou vers le module de lampe secondaire (12);
un module de connecteur (14) configuré pour connecter électriquement le module d'alimentation de courant électrique (13) au module de phare (11) et/ou au module de lampe secondaire (12); et
un module de couverture non étanche à l'eau (15) présentant une structure non étanche à l'eau,
l'unité de phare (1) présentant une structure intégrée composée d'au moins le module de phare (11), le module de lampe secondaire (12), le module d'alimentation de courant électrique (13) et le module de couvercle non étanche à l'eau (15),
dans laquelle
dans la structure intégrée, le module de phare (11), le module de lampe secondaire (12), le module d'alimentation de courant électrique (13) et le module de connecteur (14) présentent, chacun, une structure étanche à l'eau, et le module de couvercle non étanche à l'eau (15) est configuré pour recouvrir au moins une partie du module de phare (11) et au moins une partie du module de lampe secondaire (12).

2. Unité de phare (1) selon la revendication 1, dans laquelle
le module de couverture non étanche à l'eau (15) comporte
un couvercle avant (151), et
un couvercle arrière (152) disposé à l'arrière du couvercle avant (151) et configuré pour, ensemble avec le couvercle avant (151), recouvrir au moins une partie du module de phare (11) et au moins une partie du module de lampe secondaire (12), et
le couvercle arrière (152) présente un trou traversant (1522) pénétrant dans une surface intérieure et dans une surface extérieure de ce dernier.

3. Unité de phare (1) selon la revendication 1 ou 2, comprenant par ailleurs
un élément de support (16) recouvert au moins en partie par le module de couverture non étanche à l'eau (15),
dans laquelle
le module de phare (11), le module de lampe secondaire (12), le module d'alimentation de courant électrique (13) et le module de couvercle non étanche à l'eau (15) sont fixés, chacun, à l'élément de support (16), et
l'élément de support (16) présente une partie de fixation (163) configurée pour être fixée à la carrosserie de véhicule (2).

4. Unité de phare (1) selon l'une quelconque des revendications 1 à 3, dans laquelle
le module de lampe secondaire (12) entoure le module de phare (11) avec un espace (SP) entre eux dans une vue de face de l'unité de phare (1), et
le module de phare (11) et le module de lampe secondaire (12) sont disposés de manière à remplir, en vue de face, ce qui suit (a) et/ou (b):
(a) dans une direction gauche-droite de l'unité de phare (1), le module de phare (11) dans son ensemble est situé entre une extrémité la plus à gauche (12L) et une extrémité la plus à droite (12R) du module de lampe secondaire (12); et
(b) dans une direction de haut en bas de l'unité de phare (1), le module de phare (11) dans son ensemble est situé entre une extrémité supérieure (12U) et une extrémité inférieure (12D) du module de lampe secondaire (12).

5. Véhicule à inclinaison (100) comprenant l'unité de phare (1) selon l'une quelconque des revendications 1 à 4.
